**Europäisches Patentamt**

**European Patent Office**

**Office européen des brevets**

(19)

(11) Veröffentlichungsnummer : **0 064 641**
**B1**

# EUROPÄISCHE PATENTSCHRIFT

(12)

(45) Veröffentlichungstag der Patentschrift :
17.07.85

(21) Anmeldenummer : **82103430.3**

(22) Anmeldetag : **23.04.82**

(51) Int. Cl.⁴ : **F 16 H   5/12, F 15 B 11/12**

(54) **Gangzylinder mit drei Stellungen.**

(30) Priorität : **11.05.81 DE 3118583**

(43) Veröffentlichungstag der Anmeldung :
**17.11.82 Patentblatt 82/46**

(45) Bekanntmachung des Hinweises auf die Patenterteilung : **17.07.85 Patentblatt 85/29**

(84) Benannte Vertragsstaaten :
**AT CH DE FR GB IT LI NL SE**

(56) Entgegenhaltungen :
**CH-A-   446 082**
**DE-A- 1 576 093**
**FR-A- 2 069 276**
**GB-A-   663 723**
**GB-A-   680 722**
**GB-A-   983 271**
**GB-A- 1 020 430**

(73) Patentinhaber : **WABCO Westinghouse Fahrzeug-bremsen GmbH**
**Am Lindener Hafen 21 Postfach 91 12 80**
**D-3000 Hannover 91 (DE)**

(72) Erfinder : **Klatt, Alfred, Ing. grad.**
**Wannhorstweg 2**
**D-3101 Wathlingen (DE)**
Erfinder : **Brinkmann, Karlheinz**
**Misburger Strasse 97**
**D-3000 Hannover 61 (DE)**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

## Beschreibung

Die Erfindung bezieht sich auf einen Gangzylinder mit drei Stellungen gemäß dem Oberbegriff des Patentanspruchs 1.

Derartige Gangzylinder dienen in größeren Nutzfahrzeugen, die mit einer hilfskraftunterstützten Gangschaltung versehen sind, zum Einlegen der Gänge. Bei Schaltungen, die nach dem H-Schema angeordnet sind, muß der Gangzylinder drei Stellungen einnehmen können, welche den Stellungen Vorn, Mitte (neutral) und Hinten des Schalthebels entsprechen. Der Gangzylinder ist meist unter räumlich sehr beengten Verhältnissen in oder am Getriebegehäuse angeordnet. Deshalb muß er bei ausreichender Kraftwirkung möglichst klein gebaut sein. Weiterhin ist es erforderlich, die drei Stellungen, besonders die Mittelstellung, sehr exakt einzuhalten.

Es ist bereits in der am 15.9.1982 veröffentlichten, einen Stand der Technik nach Art. 54(3) EPÜ darstellenden EP-A-59853 vorgeschlagen worden, einen Drei-Stellungs-Gangzylinder mit einem außen angebrachten Hilfszylinder auszurüsten. Die Mittelstellung wird dabei dadurch erreicht, daß sich der Kolben des Hauptzylinders an einer Kolbenstange des Kolbens des Hilfszylinders abstützt. Dabei wird der Hauptzylinder mit einem gegenüber dem vollen Vorratsdruck verminderten Druck beaufschlagt. Durch die Verwendung von verminderten Drücken ist es weiterhin möglich, die Gänge mit unterschiedlichen Kräften einzulegen.

Nachteilig an dieser Ausführung ist die relativ große Länge der Zylinderanordnung.

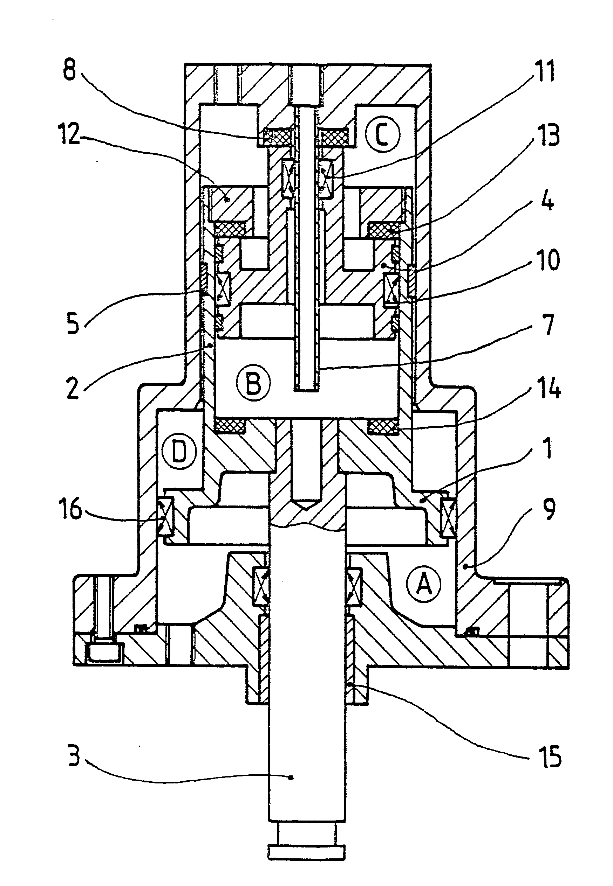

Aus der GB-A 680 722 (Fig. 2, 3), aus der die Merkmale nach dem Oberbegriff des Anspruchs 1 hervorgehen, ist ein 3-Stellungs-Zylinder bekannt, welcher zwei Druckmittelanschlüsse aufweist. Die Mittelstellung wird bei Beaufschlagung beider Druckmittelanschlüsse eingenommen. Der Zylinder hat einen hohlen Hauptkolben, in welchem ein hohler Hilfskolben beweglich gelagert ist. Der Hilfskolben läuft seinerseits auf einer zentralen Stange, die gleichzeitig eine Bewegung nach rechts begrenzt. In der Mittelstellung des Hauptkolbens befindet sich der Hilfskolben in der rechten Endstellung, und die Druckwirkung auf beide Seiten des Hauptkolbens gleicht sich in etwa aus.

Nachteilig an dieser Anordnung ist, daß die Mittelstellung nicht sicher eingenommen wird, sondern nur durch das Vorhandensein einer Reibung und der an der Kolbenstange angekoppelten Last.

Der Erfindung liegt die Aufgabe zugrunde, einen Drei-Stellungs-Gangzylinder der eingangs genannten Art anzugeben, welcher möglichst kleine Abmessungen hat, eine exakte Mittelstellung ermöglicht, und außerdem preisgünstig zu fertigen ist.

Diese Aufgabe wird durch die im Patentanspruch enthaltene Erfindung gelöst.

Der erfindungsgemäße Gangzylinder wird im folgenden anhand einer Zeichnung näher erläutert.

Die Zeichnung zeigt schematisch im Querschnitt ein Ausführungsbeispiel.

Der Gangzylinder weist einen äußeren Hauptzylinder 9 auf. Aus dem Hauptzylinder 9 tritt eine Kolbenstange 3 aus, die zu einem (nicht dargestellten) Getriebe führt. Der Gangzylinder ist in der mittleren Stellung der Kolbenstange 3 dargestellt. Im Hauptzylinder 9 befindet sich ein Hauptkolben 1 mit einer ringförmigen Dichtung 16. An diesem Hauptkolben 1 ist die Kolbenstange 3 befestigt. Auf der der Kolbenstange 3 abgewandten Seite ist der Hauptkolben 1 durch eine Hülse 2 verlängert. Die Hülse 2 ist mittels eines Gleitringes 5 im Hauptzylinder 9 geführt. Im Innern der Hülse 2 ist ein Hilfskolben 4 mit einem Dichtring 10 geführt. Zur Belüftung des Raumes B zwischen dem Hauptkolben 1 und dem Hilfskolben 4 dient ein zentral angeordnetes Röhrchen 7, welches von außen zugänglich ist. Das Röhrchen 7 ist mittels eines Dichtringes 11 gegenüber dem Hilfskolben 4 abgedichtet. Durch einen an der Hülse 2 angebrachten Ring 12 wird verhindert, daß der Hilfskolben 4 aus der Hülse 2 austreten kann. In der (gezeichneten) Mittelstellung stützt sich der Hilfskolben 4 am rechten Ende des Hauptzylinders 9 ab. Dabei dient ein zwischengelegter Dämpfungsring 8 zur Stoßdämpfung. Gleichzeitig stützt sich die Hülse 2 bzw. der Ring 12 am Hilfskolben 4 ab. Auch hier ist ein Dämpfungsring 13 zwischengelegt. Ein weiterer Dämpfungsring 14 dämpft den Anschlag des Hauptkolbens 1 an den Hilfskolben 4 in der rechten Endstellung der Kolbenstange 3. Zur Fixierung in der (gezeichneten) Mittelstellung der Kolbenstange 3 wird der links vom Hauptkolben 1 befindliche Raum A mit einem verminderten Druck beaufschlagt. Dieser Druck kann z. B. die Hälfte des vollen Behälterdruckes betragen. Hierdurch wird der Hauptkolben 1 nach rechts gedrückt. Gleichzeitig wird der zwischen den beiden Kolben 1 und 4 befindliche Raum B über das Röhrchen 7 mit dem vollen Vorratsdruck beaufschlagt. Dieser bewirkt, daß sich der Hilfskolben 4 in seiner rechten Endstellung befindet und sich über den Dämpfungsring 13 und den Ring 12 in der Hülse 2 des Hauptkolbens 1 abstützt. Der Hilfskolben 4 stützt sich seinerseits über den Dämpfungsring 8 am Hauptzylinder 9 ab. Der Raum C am rechten Ende des Hauptzylinders 9 ist drucklos.

In der Mittelstellung der Kolbenanordnung sind also die Drücke und Kolbenflächen so abgestimmt, daß die im Raum B auf den Hauptkolben 1 wirkende Kraft größer ist als die im Raum A auf den Hauptkolben 1 wirkende Kraft. Dies ist auch möglich für eine (nicht dargestellte) andere Ausführung des Gangzylinders, bei dem der Hauptzylinder 9 einen gleichbleibenden Durchmesser hat. In diesem Fall können die Räume A und B mit gleichem Druck beaufschlagt werden. Durch die von der Kolbenstange 3 bewirkte Flächenverminderung ist dann auch die im Raum A wirkende Kraft auf den Hauptkolben 1 kleiner.

In der (nicht gezeichneten) rechten Endstellung der Kolbenstange 3 wird der Raum A mit vollem Druck beaufschlagt. Der Raum B wird entlüftet, ist also drucklos, der Raum C ist ebenfalls drucklos. In dieser Stellung stützt sich der Hauptkolben 1 über den Dämpfungsring 14 am Hilfskolben 4 ab.

In der linken Endstellung der Kolbenstange 3 (nicht gezeichnet) ist der Raum A drucklos. Der Druck im Raum B ist beliebig. Die Räume C und D sind mit vollem Vorratsdruck beaufschlagt. Die Luft gelangt über den nicht abgedichteten Gleitring 5 vom Raum C in den Raum D. Der Raum D braucht deshalb nicht mit einer nach außen führenden Entlüftungsbohrung versehen zu sein.

Ein besonderer Vorteil des erfindungsgemäßen Gangzylinders liegt darin, daß dieser keinen atmenden Raum aufweist, und deshalb kein Schmutz eindringen kann. Weiterhin ist die Kolbenstange 3 durch die relativ weit auseinanderliegenden Lagerpunkte (Gleitringe 15 und 5) besonders gut geführt. Schließlich hat die Konstruktion den Vorteil, daß die Mittelstellung exakt und wiederholbar eingestellt werden kann.

**Patentanspruch**

Gangzylinder mit drei Stellungen, der in einem Hauptzylinder (9) einen Hauptkolben (1) aufweist, welcher zum Fixieren einer Mittelstellung durch ein Druckmittel gegen einen Anschlag gedrückt ist,
mit folgenden Merkmalen :

a) es ist ein Hauptkolben (1) vorgesehen, der an der einen Seite einer Kolbenstange (3) befestigt ist, und an der der Kolbenstange (3) abgewandten Seite eine Hülse (2) aufweist, die sich in axialer Richtung ausdehnt ;

b) die Hülse (2) dient als Zylinderwand für einen frei beweglichen Hilfskolben (4) ;

c) es ist ein von außen belüftbarer Raum (A) vor der der Kolbenstange (3) zugewandten Seite des Hauptkolbens (1) vorgesehen ;

d) es ist ein von außen belüftbarer Raum (B) zwischen dem Hauptkolben (1) und dem Hilfskolben (4) vorgesehen ;

e) es ist ein von außen belüftbarer Raum (C) zwischen der der Kolbenstange (3) abgewandten Stirnwand des Hauptzylinders (9) und dem Hilfskolben (4) vorgesehen ;
gekennzeichnet durch folgende Merkmale :

f) durch den Hilfskolben (4) ist abgedichtet ein zentral angeordnetes Röhrchen (7) zur Belüftung des Raumes (B) geführt, das durch die Stirnwand des Hauptzylinders (9) nach außen führt ;

g) in der Mittelstellung stützt sich der Hilfskolben (4) am rückseitigen Ende des Hauptzylinders (9) und der Hauptkolben (1) am Hilfskolben (4) ab.

**Claim**

Gear-change cylinder with three positions, which has a main piston (1) in a main cylinder (9), which piston is pressed by a pressure medium against a stop in order to fix a central position, having the following features :

a) a main piston (1) is provided which is secured on one end of a piston rod (3), and has on the end remote from the piston rod (3) a sleeve (2) which extends in an axial direction ;

b) the sleeve (2) serves as a cylinder wall for a freely movable auxiliary piston (4) ;

c) a space (A) which can be pressurised from the outside is provided in front of the end of the main piston (1) facing the piston rod (3) ;

d) a space (B) which can be pressurised from the outside is provided between the main piston (1) and the auxiliary piston (4) ;

e) a space (C) which can be pressurised from the outside is provided between the end wall of the main cylinder (9) remote from the piston rod (3) and the auxiliary piston (4) ;
characterised by the following features :

f) a centrally arranged tube (7) for pressurising the space (B), which tube leads through the end wall of the main cylinder (9) to the outside, is passed through the auxiliary piston (4) in such a manner that it is sealed,

g) in the central position the auxiliary piston (4) rests against the rear end of the main cylinder (9) and the main piston (1) rests against the auxiliary piston (4).

**Revendication**

Vérin de changement de vitesse à trois positions, qui comprend, à l'intérieur d'un cylindre principal (9), un piston principal (1), qui est appliqué contre une butée par un fluide sous pression pour la fixation d'une position centrale. ce vérin présentant les caractéristiques suivantes :

a) il est prévu un piston principal (1) qui est fixé à une tige de piston (3) sur une face et qui présente, sur la face qui est à l'opposé de la tige de piston (3), un manchon (2) qui s'étend dans la direction axiale ;

b) le manchon (2) sert de paroi de cylindre pour un piston auxiliaire (4) librement mobile ;

c) il est prévu une chambre (A) pouvant être alimentée en air de l'extérieur, devant la face du piston principal (1) qui est dirigée vers la tige de piston (3) ;

d) il est prévu une chambre (B) pouvant être alimentée en air de l'extérieur entre le piston principal (1) et le piston auxiliaire (4) ;

e) il est prévu une chambre (C) pouvant être alimentée en air de l'extérieur entre la paroi frontale du cylindre principal (9) qui est à l'opposé de la tige de piston (3) et le piston auxiliaire (4) ;
ce vérin étant caractérisé par les caractéristiques suivantes :

f) un petit tube (7) disposé en position centrale et destiné à l'alimentation en air de la chambre (B) est enfilé à joint étanche à travers le piston auxiliaire (4) et émerge à l'extérieur à travers la paroi frontale du cylindre principal (9) ;

g) dans la position centrale, le piston auxiliaire (4) prend appui sur l'extrémité arrière du cylindre principal (9) et le piston principal (1) prend appui sur le piston auxiliaire (4).